# NEUE EUROPÄISCHE PATENTSCHRIFT

(11) **EP 1 369 211 B2**
(45) Veröffentlichungstag und Bekanntmachung des Hinweises auf die Entscheidung über den Einspruch: **21.10.2015**
(45) Hinweis auf die Patenterteilung: 03.10.2007
(21) Anmeldenummer: 03011402.9
(22) Anmeldetag: 20.05.2003
(51) Int. Cl.: B25J 19/00, H02G 3/04

(54) **Vorrichtung zum Führen und Zurückholen eines Schlauches eines Industrieroboters**
Device for guiding and retracting the hose of an industrial robot
Dispositif de guidage et de rappel d'un conduit flexible de robot

(30) Priorität: 05.06.2002 DE 10224858
(43) Veröffentlichungstag der Anmeldung: 10.12.2003
(73) Patentinhaber: KUKA Roboter GmbH, 86165 Augsburg (DE)
(72) Erfinder: Karlinger, Stefan, 86199 Augsburg (DE)
(74) Vertreter: Schlotter, Alexander Carolus Paul

(56) Entgegenhaltungen:
- EP-A- 0 891 842
- EP-A- 0 950 477
- EP-A- 1 145 808
- EP-A1- 0 144 602
- WO-A-01/59900
- WO-A1-98/19090
- DE-A1- 3 434 899
- DE-U- 9 406 405
- DE-U- 20 112 491
- DE-U1- 20 014 649
- DE-U1- 29 803 637
- DE-U1- 29 908 623
- FR-A- 2 778 449
- FR-A- 2 814 290
- JP-A- 2002 067 828
- Europäische Norm EN ISO 8373

## Beschreibung

Die Erfindung betrifft eine Vorrichtung zum Führen und Zurückholen mindestens eines Schlauches eines Industrieroboters.

Derartige Vorrichtungen zum Führen eines Schlauches werden bei Maschinen, Anlagen, insbesondere aber Robotern, zum Führen eines Schutzschlauches vorgesehen, in dem Versorgungsleitungen, wie Energie- und Steuerkabel, Fluide, wie Kühlflüssigkeiten oder aber gasförmige Fluide zur Erzeugung eines Über- oder auch eines Unterdrucks geführt sind. Die Erfindung findet hier ihr bevorzugtes Anwendungsgebiet.

Derartige Schläuche sind beispielsweise bei einem Roboter entlang der Teile des Roboters, wie entlang des Roboterarms und entlang der Schwinge, geführt. Aufgrund der Bewegungen des Roboters, insbesondere auch der Roboterhand, die in der Regel ein Werkzeug trägt, das durch die Versorgungsleitung versorgt ist, müssen die Versorgungsleitungen und der Schutzschlauch Längenausgleichsbewegungen durchführen können. Üblicherweise ist der Schutzschlauch durch eine schraubenartige Spannfeder umgeben, die einerseits an einem Widerlager am Schutzschlauch selbst, andererseits an einem Roboter festen Teil findet. Die Führung erfolgt entweder über einen separaten Schlitten oder mehrere Lagerstellen, die rohrstutzenförmig ausgebildet sind und in denen oder entlang derer der Schutzschlauch gleiten kann.

Nachteilig ist bei derartigen Führungsvorrichtungen, dass die Schlittenführungen aufwendig sind und die mehrfache Lagerungen ungenau sind, d.h. sie ermöglichen dem Führungsschlauch und damit den Versorgungsleitungen relativ große Ausweichbewegungen und hierdurch ist eine Beschädigungsgefahr für den Schlauch und auch die Versorgungsleitung gegeben. Darüber hinaus sind beide Ausgestaltungen teuer und sperrig.

Die DE 201 12 491 U1 zeigt einen Industrieroboter mit einer gattungsgemäßen Leitungsführung, bei der ein Schutzschlauch von einer Schraubenfeder umgeben ist, die einerseits ein Widerlager an einem roboterfesten Teil findet, anderseits an einer an dem Schlauch befestigten Ring. Es besteht die Gefahr, dass nach Herausziehen des Schlauches und Komprimierung der Feder bei Entlastung bzw. Nachgeben dann, wenn das Zurückführen des Schlauches in irgendeiner Weise behindert wird, dieser und die ihn umgebende Schraubenfeder seitlich ausbricht, was zu Beschädigungen und sonstigen Beeinträchtigungen führen kann.

Die FR 2 778 449 zeigt eine längsgestreckte Kabelnuss mit seitlichen Aufnahmen für einzelne Kabel. Dies dient lediglich zur gestreckten Halterung der Kabel, auf die keinerlei Zug oder dergleichen ausgeübt wird.

Der Erfindung liegt die Aufgabe zugrunde, eine Vorrichtung zum Führen und zum Längenausgleich eines Schlauches eines Industrieroboters in kompakter und einfacher Ausgestaltung zu schaffen, die ein weitgehendes genaues Führen und Zurückholen des Schlauches in kleinem Raum ermöglicht.

Erfindungsgemäß wird die genannte Aufgabe mit einer Vorrichtung zum Führen und Zurückholen mindestens eines Schlauches eines Industrieroboters gelöst, die die Merkmale des Anspruchs 1 aufweist.

Die Breite der seitlichen Öffnung ist aber dennoch derart, dass sie die Querabmessung der durch den Schutzschlauch geführten Versorgungsleitungen übersteigt, vorzugsweise deutlich übersteigt, um ein Umbiegen der Versorgungsleitungen zu vermeiden. Erfindungsgemäß weist die Rinne einen kreisförmigen Querschnitt auf.

Um die Gefahr eines Beschädigens der seitlich durch die seitliche Längsöffnung herausgeführten Versorgungsleitungen und/oder eines diesen in diesem Bereich umgebenden, also mit seitlich aus der Rinne herausgeführten Schutzschlauches (soweit dieser von einer Feder umgeben ist, damit er im die Feder umgebenden Bereich nicht aus der Rinne herausgedrückt wird) zu verringern, sieht die Erfindung weiterhin vor, dass die Rinne im Bereich ihrer Längsöffnung mit seitlich erstreckenden Längsansätzen versehen ist, wobei insbesondere die Längsansätze im Bereich ihrer freien Längskanten einen größeren Relativabstand aufweisen als in ihrem Übergangsbereich zur Rinne.

Wenn der Schutzschlauch zur Ausübung einer Vorspannung entgegen der Bewegung des Teils, zu dem er die Versorgungsleitung führt, mit einer Feder umgeben ist, so sieht eine bevorzugte Ausgestaltung vor, dass ein Widerlager für eine den Schlauch umgebende Feder mit der Rinne verbunden ist, wobei insbesondere das Widerlager als Umfangsnut ausgebildet ist, in die ein Ende der Feder eingreift. Ein weiteres Widerlager findet die Feder an einem dem Werkzeug abgewandten Bereich des Schutzschlauches, beispielsweise indem dort ein Verschleißring aufgesetzt ist.

Auf der dem Werkzeug zugewandten Seite der Rinne ist erfindungsgemäß eine trompetenartige Halterung für den Schlauch vorgesehen, die erfindungsgemäß als aufklappbare Schelle ausgebildet ist, so dass der Schlauch bei aufgeklappter Schelle seitlich in dieser eingelegt werden kann und nach Schließen vollständig von dieser umgeben ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine an einem Roboter (teilweise dargestellt) angeordnete Vorrichtung zum Führen eines Schlauches;

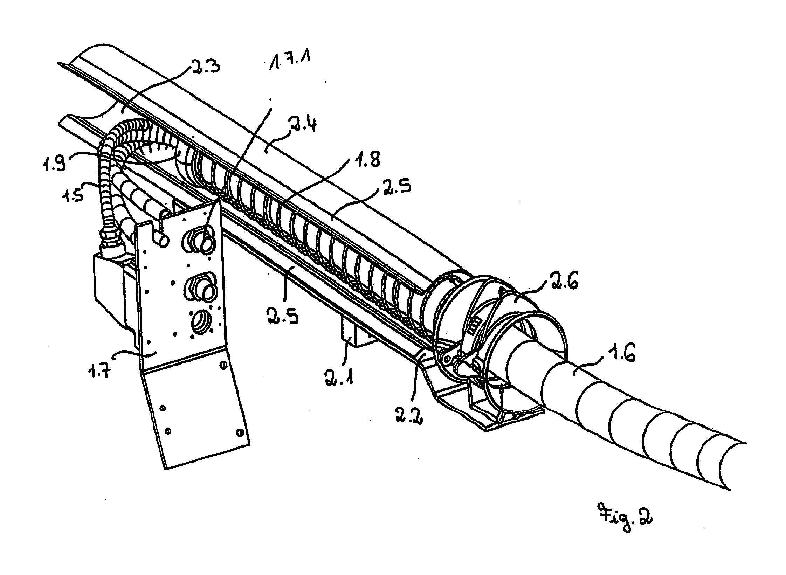

- Fig. 2: eine vergrößerte Darstellung der erfindungsgemäßen Vorrichtung zum Führen eines Schlauches mit einem in dieser angeordneten Schutzschlauch für Kabel;

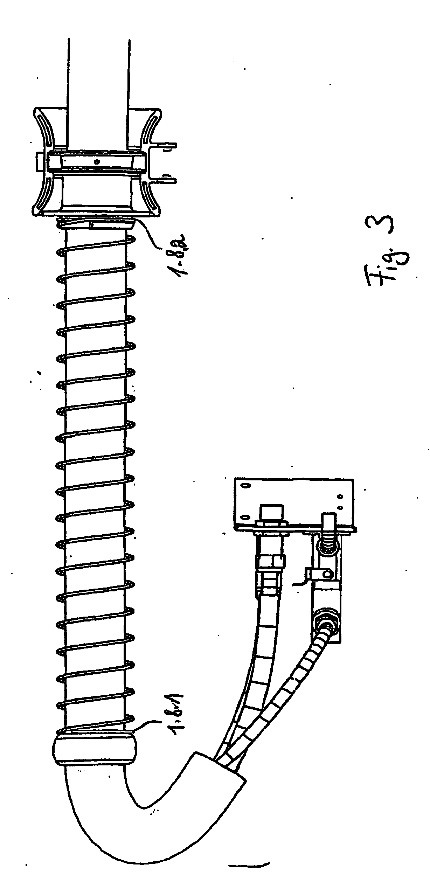

- Fig. 3: einen Schnitt durch die Rinne der erfindungsgemäßen Vorrichtung zum Führen des Schlauches mit eingelegtem Schlauch; und
- Fig. 4a, 4b: Detaildarstellung der End- und Anlagebereiche der Spannfeder der Fig. 1 bis 3.

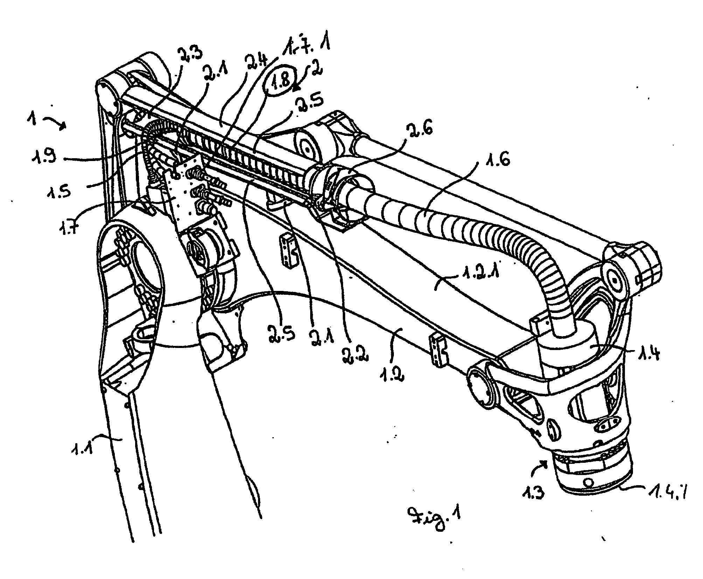

Die Figur 1 zeigt Teile eines Roboters 1, nämlich eine Schwinge 1.1, einen Roboterarm 1.2 und eine Roboterhand 1.3. Diese trägt einen in der dargestellten Ausführungsform Motor mit Hohlachse für die letzte Handachse, wobei am Flansch 1.4.1 ein Werkzeug anbringbar ist. Die Hand 1.3 könnte alternativ unmittelbar ein Werkzeug halten. Die Versorgung des Motors 1.4 oder einem Werkzeug, wie elektrische Energieversorgung, Versorgung mit Medien, wie Kühlmedien, aber auch "Versorgung" mit Unterdruck, also Ausübung eines Unterdrucks von an einem Werkzeug 1.4 vorhandenen Saugnäpfen, erfolgt über Versorgungsleitungen 1.5, die in einem Schutzschlauch 1.6 geführt sind. An ihrem dem Motor 1.4 abgewandten Ende münden die Versorgungsleitungen 1.5 in einer Anschlussplatte 1.7, die am Roboterarm 1.2 festgelegt sind und Anschlüsse 1.7.1 zum Anschluss an entlang der Schwinge 1.1 zum Sockel (nicht dargestellt) des Roboters 1 weitergeführten Versorgungsleitungen aufweist.

Der - teilweise - dargestellte Roboter ist ein Palletierroboter. Die Erfindung ist auch bei anderen üblichen Industrierobotern einsetzbar.

Auf der Oberseite 1.2.1 des Roboterarms 1.2 ist eine Vorrichtung 2 zum Führen des Schlauches 1.6 angeordnet. Diese weist zwei auf der Oberseite 1.2.1 des Roboterarms 1.2 befestigte Stege 2.1 auf, die eine Tragplatte 2.2 tragen, auf der wiederum eine mit einer seitlichen Längsöffnung 2.3 versehene Rinne 2.4 gehalten ist. Die Rinne 2.4 ist an ihrem die Öffnungen begrenzenden Kanten mit seitlichen Längsansätzen versehen, die sich nach außen hin erweitern, also einen größeren Relativabstand an ihrer freien Außenkante aufweisen als an ihrem Übergangsbereich zur eigentlichen Rinne 2.4.

Der Schutzschlauch 1.6 ist von einer schraubenförmigen Spannfeder 1.8 umgeben. An seinem freien, dem Werkzeug 1.4 abgewandten rückwärtigen Ende ist er mit einem Verschleißring 1.9 versehen, an dem die Spannfeder 1.8 eines ihrer Widerlager findet.

Am vorderen Ende der Tragplatte 2.2 ist mit dieser eine trompetenartig ausgebildete Schelle 2.6 verbunden, durch die der Schutzschlauch 1.6 zum Werkzeug 1.4 der Rinne 2.4 herausgeführt ist. An dieser Schelle 2.6 ist ein Fest-Widerlager für die Spannfeder 1.8 ausgebildet, beispielsweise in Form einer ringförmigen Nut, in der das der Schelle 2.6 zugewandte Ende der Feder 1.8 eingreift und damit seitlich gehalten ist.

Bewegt sich nun die Roboterhand 1.3 mit dem Werkzeug 1.4, beispielsweise mit ihrer Unterseite auf die Schwinge 1.1 zu, so zieht sie den Schutzschlauch 1.6 und die Versorgungsleitung 1.5 gegen die Wirkung der Spannfeder 1.8 nach, während in einer entgegengesetzten Bewegung von Roboterhand 1.3 und Werkzeug 1.4 Schutzschlauch 1.6 und Versorgungsleitung 1.5 freigegeben werden und daher der Schutzschlauch 1.6 mit seinem der Roboterhand 1.3 abgewandten Ende unter der Wirkung der Spannfeder 1.8 weiter nach hinten der Vorrichtung 2 bewegt werden kann. Entsprechendes gilt bei Verschwenken von Roboterhand 1.3 und/oder Werkzeug 1.4 um die Symmetrieachse von Werkzeug 1.4/Roboterhand 1.3.

Bei den genannten Bewegungen laufen die Versorgungsleitungen dem Ende des Schutzschlauches nach und ändern dabei ihren Krümmungsradius zwischen Austritt aus dem Schutzschlauch 1.6 und der Anschlussplatte 1.7. Bei Entlastung bewegen sich die Versorgungsleitungen 1.5 mit dem Ende des Schutzschlauches 1.6 zurück und nehmen ihre ursprüngliche Krümmung wieder an.

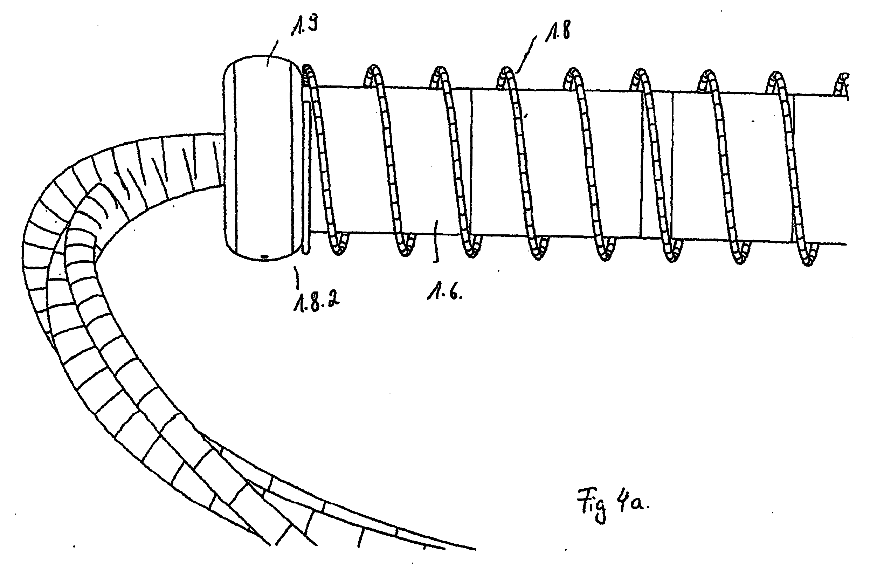

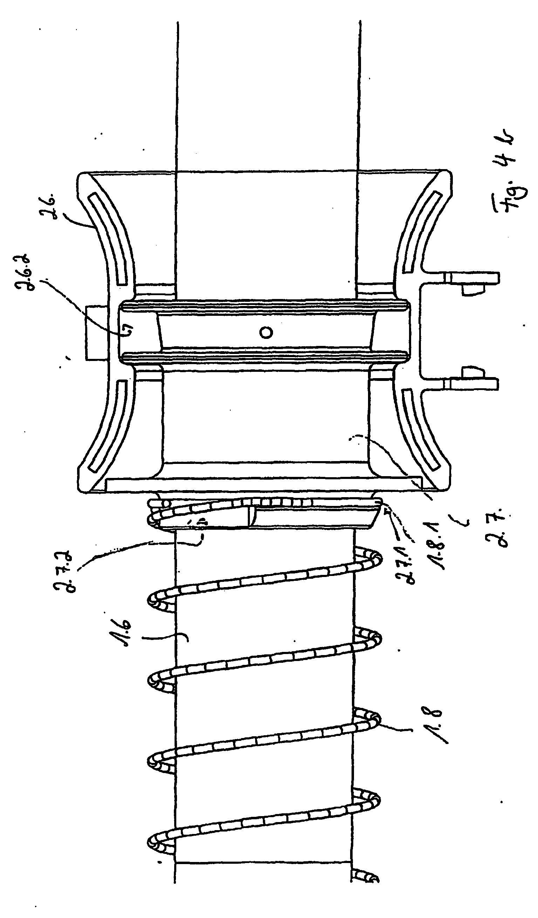

Wie insbesondere den Figuren 4a und 4b zu entnehmen ist, ist die jeweilige letzte endseitigen Windung 1.8.1, 1.8.2 der Spannfeder 1.8 jeweils in eine achssenkrechte Ebene ausgebildet, so dass die End-Windung 1.8.1 nahezu vollringförmig am Verschleißring 1.9 anliegt. Die gegenüberliegende End-Windung 1.8.2 der Spannfeder 1.8 liegt in einer Ringnut 2.7.1 eines Einsatzteils 2.7 der Schelle 2.6, in welche die Spannfeder 1.8 über eine Ausnehmung 2.7.2 übertritt und in deie End-Windung 1.8.2 eingerastet ist. Das Einsatzteil 2.7 ist im Mittelbereich 2.6.1 der Schelle 2.6 durch diese (nach Schließen derselben) zumindest in axialer Richtung formschlüssig gehalten.

Durch die Erfindung wird eine in einer Einheit ausgebildete kompakte Vorrichtung zum Führen eines Schlauches, wie hier eines Schutzschlauches für Versorgungsleitungen eines Roboters, geschaffen, die ein exaktes Führen des Schlauches und Zurückholen bei geringem Platzbedarf ermöglicht.

### Bezugszeichenliste

- 1: Roboter
- 1.1: Schwinge
- 1.2: Roboterarm
- 1.2.1: Oberseite des Roboterarms
- 1.3: Roboterhand
- 1.4: Werkzeug
- 1.5: Versorgungsleitungen
- 1.6: Schutzschlauch
- 1.7: Anschlussplatte
- 1.7.1: Anschlüsse
- 1.8: Spannfeder
- 1.8.1: Endwindung (von 1.8)
- 1.8.2: Endwindung (von 1.8)
- 1.9: Verschleißring

- 2: Vorrichtung zum Führen des Schlauchs
- 2.1: Stege
- 2.2: Tragplatte
- 2.3: Längsöffnung
- 2.4: Rinne
- 2.5: Längsansätze
- 2.6: Schelle
- 2.6.1: Mittelbereich (von 2.6)

- 2.7: Einsatzteil
- 2.7.1: Ringnut
- 2.7.2: Ausnehmung

## Patentansprüche

1. Vorrichtung zum Führen und Zurückholen mindestens eines Schlauchs (1.6) eines Industrieroboters, mit einer Rinne (2.4) mit seitlicher Längsöffnung (2.3) und mit einer den Schlauch (1.6) umgebenden Spannfeder (1.8), wobei die Breite der seitlichen Öffnung (2.3) der Rinne (2.4) geringer als die Abmessung der den Schlauch umgebenden Spannfeder (1.3) ist, **dadurch gekennzeichnet, dass** die Rinne (2.4) einen kreisförmigen Querschnitt aufweist, weiter **gekennzeichnet durch** eine trompetenartige Halterung (2.6) für den Schlauch (1.6), die als aufklappbare Schelle ausgebildet ist, und ein Einsatzteil (2.7) mit einer Ringnut (2.7.1), in welche die Spannfeder (1.8) über eine Ausnehmung (2.7.2) übertritt und in die eine Endwindung (1.8.2) eingerastet ist, wobei das Einsatzteil (2.7) in einem Mittelbereich (2.6.1) der Schelle (2.6) **durch** diese nach Schließen derselben zumindest in axialer Richtung formschlüssig gehalten ist.

2. Vorrichtung nach Anspruch 1, **dadurch gekennzeichnet, dass** die Rinne (2.4) im Bereich ihrer Längsöffnung (2.3) mit seitlich erstreckenden Längsansätzen (2.5) versehen ist.

3. Vorrichtung nach Anspruch 2, **dadurch gekennzeichnet, dass** die Längsansätze (2.5) im Bereich ihrer freien Längskanten einen größeren Relativabstand aufweisen als in ihrem Übergangsbereich zur Rinne (2.4).

4. Vorrichtung nach einem der vorangehenden Ansprüche, **dadurch gekennzeichnet, dass** die Rinne (2.4) / oder die Halterung (2.6) und eine Halteschiene (2.2) durch Stege (2.1) festgelegt sind.

## Claims

1. Device for guiding and fetching back at least one industrial robot hose (1.6), having a channel (2.4) with a lateral longitudinal opening (2.3) and with a tension spring (1.8) surrounding the hose (1.6), the width of the lateral opening (2.3) of the channel (2.4) being smaller than the size of the tension spring surrounding the hose, **characterized in that** the channel (2.4) has a circular cross-section, further **characterized by** a trumpet-like holder (2.6) for the hose (1.6), which is constructed as a swing-out clamp, and an insert part (2.7) with an annular groove (2.7.1), in which the tension spring (1.8) passes over through a recess (2.7.2) and in which an end coil (1.8.2) is locked, wherein the insert part (2.7) is held in a central area (2.6.1) of the holder (2.6) by the holder after closing the same at least in axial direction by form-fit.

2. Device according to claim 1, **characterized in that** in the vicinity of its longitudinal opening (2.3) the channel (2.4) is provided with laterally extending longitudinal shoulders (2.5).

3. Device according to claim 2, **characterized in that** in the vicinity of their free longitudinal edges the longitudinal shoulders (2.5) have a larger relative spacing than in their transition area to the channel (2.4).

4. Device according to one of the preceding claims, **characterized in that** the channel (2.4) or the holder (2.6) and a support bar (2.2) are secured by webs (2.1).

## Revendications

1. Dispositif pour guider et rappeler au moins un tuyau flexible (1.6) d'un robot industriel, avec une goulotte (2.4) avec ouverture longitudinale latérale (2.3) et avec un ressort de rappel (1.8) entourant le tuyau flexible (1.6), la largeur de l'ouverture latérale (2.3) de la goulotte (2.4) étant inférieure à la dimension du ressort de rappel entourant le tuyau flexible, **caractérisé en ce que** la goulotte (2.4) présente une section circulaire, en plus **caractérisé par** une fixation en forme de trompette (2.6) pour le tuyau flexible (1.6), la fixation (2.6) se présentant sous forme d'un étrier relevable, et un élément d'insertion (2.7) avec une rainure annulaire (2.7.1), dans laquelle le ressort de rappel (1.8) s'étend par un creux (2.7.2) et dans laquelle une spire d'extremité est engagée, l'élément d'insertion (2.7) étant retenu à engagement positive dans une zone moyenne (2.6.1) de l'étrier (2.6) par celui après la fermeture du même au moins en direction axiale.

2. Dispositif selon la revendication 1, **caractérisé en ce que** la goulotte (2.4) est pourvue de protubérances longitudinales (2.5) s'étendant latéralement dans la zone de son ouverture longitudinale (2.3).

3. Dispositif selon la revendication 2, **caractérisé en ce que** les protubérances longitudinales (2.5) présentent un espacement relatif plus grand dans la zone de leurs bords libres que dans la zone de transition vers la goulotte (2.4).

4. Dispositif selon une des revendications qui précèdent, **caractérisé en ce que** la goulotte (2.4) / ou la fixation (2.6) et un rail de retenue (2.2) sont fixés par des entretoises (2.1).
